# EUROPEAN PATENT SPECIFICATION

(11) **EP 3 916 654 B1**
(45) Date of publication and mention of the grant of the patent: **03.12.2025**
(21) Application number: 19911557.7
(22) Date of filing: 06.03.2019
(51) Int. Cl.: G06F 16/75, G06Q 10/0631, G06Q 10/0633

(54) **OPERATION ANALYSIS DEVICE, OPERATION ANALYSIS METHOD, OPERATION ANALYSIS PROGRAM, AND OPERATION ANALYSIS SYSTEM**
OPERATIONSANALYSEVORRICHTUNG, OPERATIONSANALYSEVERFAHREN, OPERATIONSANALYSEPROGRAMM UND OPERATIONSANALYSESYSTEM
DISPOSITIF D'ANALYSE D'OPÉRATION, PROCÉDÉ D'ANALYSE D'OPÉRATION, PROGRAMME D'ANALYSE D'OPÉRATION ET SYSTÈME D'ANALYSE D'OPÉRATION

(30) Priority: 23.01.2019 JP 2019009007
(43) Date of publication of application: 01.12.2021
(73) Proprietor: OMRON Corporation, Shiokoji-dori, Shimogyo-ku, Kyoto-shi Kyoto 600-8530 (JP)
(72) Inventor: NISHIDA, Kazuki, Kyoto 619-0283 (JP)
(74) Representative: Becker, Eberhard
(86) International application number: PCT/JP2019/008942
(87) International publication number: WO 2020/152878

(56) References cited:
- JP-A- 2008 108 008
- JP-A- 2011 034 234
- JP-A- 2018 109 882
- US-A1- 2016 239 769
- BAUTERS KAREL ET AL: "Automated work cycle classification and performance measurement for manual work stations", ROBOTICS AND COMPUTER INTEGRATED MANUFACTURING, ELSEVIER SCIENCE PUBLISHERS BV., BARKING, GB, vol. 51, 27 December 2017 (2017-12-27), pages 139 - 157, XP085351415, ISSN: 0736-5845, DOI: 10.1016/J.RCIM.2017.12.001

## Description

### [Technical Field]

The present invention relates to an operation analysis device, an operation analysis method, an operation analysis program, and an operation analysis system.

### [Background Art]

Conventionally, one or more cameras may be installed in a manufacturing line of a product to record operations of a worker as an image or a moving image. Also, image recognition processing may be performed on the captured image or moving image to analyze the operations of the worker.

For example, Patent Literature 1 below describes a monitoring device for monitoring a worker, which calculates operation information of each part of the worker based on at least either one of positional information and posture information of the worker and a human body model of the worker and determines whether or not the operation of the worker is appropriate based on an operation model and the operation information when the worker performs work.

### [Citation List]

### [Patent Literature]

[Patent Literature 1]
Japanese Patent Laid-Open No. 2017-146661

Non-patent literature "BAUTERS KAREL ET AL: "Automated work cycle classification and performance measurement for manual work stations", ROBOTICS AND COMPUTER INTEGRATED MANUFACTURING, ELSEVIER SCIENCE PUBLISHERS BV., BARKING, GB, vol. 51, 27 December 2017, pages 139-157, XP085351415, ISSN: 0736-5845" relates to a video-based system that automates the analysis of manual assembly line work stations and generates near real-time information to support workers in their pursuit of continuous improvement, and proposes a work cycle classification method to detect anomalous and problematic situations in the work flow. Besides the classification of work cycles, the method also generates performance indicators to analyze the performance of the operator in the system.

### [Summary of Invention]

### [Technical Problem]

When whether or not an operation of a worker is appropriate is analyzed, for example, reference operation information such as the operation model of Patent Literature 1 may be provided, and operation information of the worker may be compared with the reference operation information.

Here, the reference operation information may be extracted by an expert from operation information accumulated in the past. In that case, extracting the reference operation information requires a lot of time, and it is difficult to secure human resources with extraction skills.

Therefore, the present invention provides an operation analysis device, an operation analysis method, an operation analysis program, and an operation analysis system that make it easier to extract information indicating a reference operation from accumulated information indicating the operation.

### [Solution to Problem]

An operation analysis device according to one aspect of the present disclosure includes an acquisition unit for acquiring a plurality of pieces of time series information indicating an operation that is recorded when one or more workers perform a predetermined operation one or more times, a calculation unit for calculating a degree of similarity between two pieces of time series information out of the plurality of pieces of time series information, a classification unit for classifying the plurality of pieces of time series information into a plurality of clusters based on the degree of similarity, a selection unit for selecting one or more clusters satisfying a predetermined condition from the plurality of clusters, and a first extraction unit for extracting time series information indicating a reference operation from the selected one or more clusters satisfying the predetermined condition.

According to this aspect, the plurality of pieces of time series information indicating the predetermined operation performed by a worker is classified into a plurality of clusters, one or more clusters satisfying the predetermined condition are selected from the plurality of clusters, and thereby a cluster of time series information indicating a standard operation of the one or more workers can be selected and information indicating the reference operation is made easier to be extracted.

In the aspect described above, the plurality of pieces of time series information are a plurality of moving images in which one or more workers perform the predetermined operation one or more times.

In the aspect described above, the classification unit may classify the plurality of pieces of time series information into the plurality of clusters by hierarchical clustering in which the time series information is grouped into a cluster in descending order of the degree of similarity.

According to this aspect, the time series information is appropriately clustered without being dependent on initial conditions of the clustering, and thereby the information indicating the reference operation can be extracted.

In the aspect described above, the selection unit may select a subtree whose number of leaf nodes is equal to or more than a first threshold value and less than a second threshold value from a dendrogram of the plurality of pieces of time series information obtained by the hierarchical clustering as the one or more clusters satisfying the predetermined condition.

According to this aspect, candidates for the time series information indicating the reference operation can be narrowed down while excluding outliers.

In the aspect described above, the first extraction unit may extract the time series information indicating the reference operation based on a length of the time series information from each of the one or more clusters satisfying the predetermined condition.

According to this aspect, time series information in which it is highly probable that unnecessary operations are not included can be extracted from the candidates for the time series information indicating the reference operation as the time series information indicating the reference operation.

The aspect described above may further include a second extraction unit which extracts one or more feature points from the time series information indicating the reference operation, and an imparting unit which imparts information indicating a division point of the operation to the time series information indicating the reference operation based on the one or more feature points.

According to this aspect, the division point of the operation can be clarified for the operation of the worker indicated by reference time series information, and when it is compared with other time series information, comparison for each operation can be performed.

In the aspect described above, the second extraction unit may extract a first feature point included in the time series information indicating the reference operation, exclude a section before and after the first feature point from an extraction target, and perform extraction of a second feature point included in the time series information indicating the reference operation.

According to this aspect, the division point of the operation can be extracted with higher accuracy.

In the aspect described above, the plurality of pieces of time series information may be information obtained by summing speeds or accelerations of a plurality of parts of the one or more workers.

According to this aspect, movements of the plurality of parts of the worker can be represented by a single piece of time series information, and reference information for the movements of the plurality of parts can be extracted.

An operation analysis method according to another aspect of the present disclosure includes acquiring a plurality of pieces of time series information indicating an operation that is recorded when one or more workers perform a predetermined operation one or more times, calculating a degree of similarity between two pieces of time series information out of the plurality of pieces of time series information, classifying the plurality of pieces of time series information into a plurality of clusters based on the degree of similarity, selecting one or more clusters satisfying a predetermined condition from the plurality of clusters, and extracting time series information indicating a reference operation from the selected one or more clusters satisfying the predetermined condition.

According to this aspect, the plurality of pieces of time series information indicating the predetermined operation performed by the worker is classified into a plurality of clusters, one or more clusters satisfying the predetermined condition are selected from the plurality of clusters, and thereby a cluster of time series information indicating a standard operation of the one or more workers can be selected and information indicating the reference operation is made easier to be extracted.

An operation analysis program according to still another aspect of the present disclosure causes an arithmetic unit provided in an operation analysis device to function as an acquisition unit which acquires a plurality of pieces of time series information indicating an operation that is recorded when one or more workers perform a predetermined operation one or more times, a calculation unit which calculates a degree of similarity between two pieces of time series information out of the plurality of pieces of time series information, a classification unit which classifies the plurality of pieces of time series information into a plurality of clusters based on the degree of similarity, a selection unit which selects one or more clusters satisfying a predetermined condition from the plurality of clusters, and a first extraction unit which extracts time series information indicating a reference operation from the selected one or more clusters satisfying the predetermined condition.

According to this aspect, the plurality of pieces of time series information indicating the predetermined operation performed by the worker is classified into a plurality of clusters, one or more clusters satisfying the predetermined condition are selected from the plurality of clusters, and thereby a cluster of time series information indicating a standard operation of the one or more workers can be selected and information indicating the reference operation is made easier to be extracted.

According to this aspect, the plurality of pieces of time series information indicating the predetermined operation performed by the worker is classified into a plurality of clusters, one or more clusters satisfying the predetermined condition are selected from the plurality of clusters, and thereby a cluster of time series information indicating a standard operation of the one or more workers can be selected and information indicating the reference operation is made easier to be extracted.

### [Advantageous Effects of Invention]

According to the present invention, it is possible to provide an operation analysis device, an operation analysis method, an operation analysis program, and an operation analysis system that make it easier to extract information indicating the reference operation from accumulated information indicating the operation.

### [Brief Description of Drawings]

Fig. 1 is a view illustrating an overview of an operation analysis system according to an embodiment of the present invention.
Fig. 2 is a diagram showing functional blocks of the operation analysis system according to the present embodiment.
Fig. 3 is a diagram showing physical components of an operation analysis device according to the present embodiment.
Fig. 4 is a view illustrating a first example of a dendrogram selected by the operation analysis device according to the present embodiment.
Fig. 5 is a view illustrating a second example of the dendrogram selected by the operation analysis device according to the present embodiment.
Fig. 6 is a view illustrating a third example of the dendrogram selected by the operation analysis device according to the present embodiment.
Fig. 7 is a flowchart of extraction processing of reference operation information performed by the operation analysis device according to the present embodiment.
Fig. 8 is a diagram showing a first example of a feature point extracted by the operation analysis system according to the present embodiment and a mask being set.
Fig. 9 is a diagram showing a second example of the feature point extracted by the operation analysis system according to the present embodiment and a mask being set.
Fig. 10 is a flowchart of operation division processing performed by the operation analysis device according to the present embodiment.

### [Description of Embodiments]

Hereinafter, an embodiment according to one aspect of the present invention (hereinafter referred to as "the present embodiment") will be described with reference to the drawings. In each of the drawings, those denoted by the same reference signs are the same or similar components.

### §1 Application example

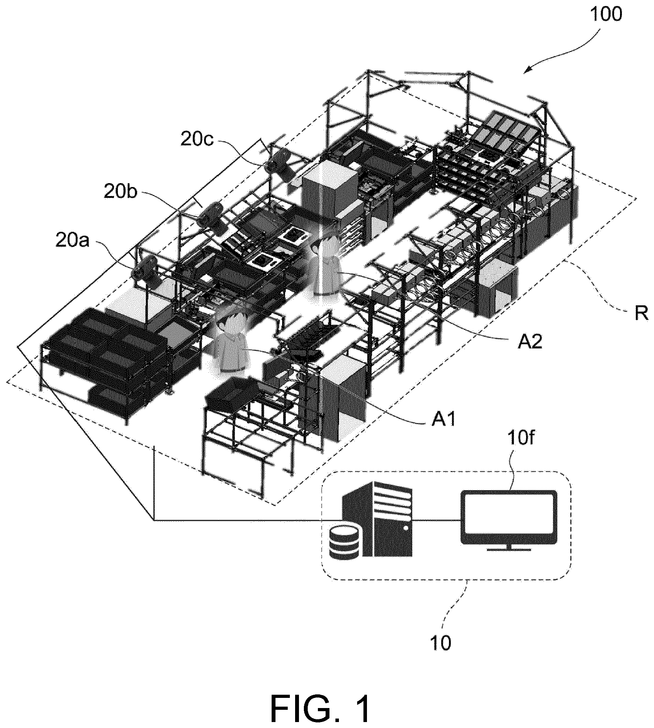

First, an example of a case to which the present invention is applied will be described with reference to Fig. 1. An operation analysis system 100 according to the present embodiment includes a first imaging unit 20a, a second imaging unit 20b, and a third imaging unit 20c that capture moving images showing an operation of a worker performed in a certain work region R. The work region R of the present example is a region including the entire manufacturing line, but the work region R may be an arbitrary region, for example, a region in which a predetermined process is performed or a region in which a predetermined element operation is performed. Here, "element operation" is a unit operation performed by the worker, and may include, for example, operations such as picking a part, disposing a part, fixing a part, and packaging a product. In the present embodiment, three processes are assumed to be performed in the work region R, and the first imaging unit 20a, the second imaging unit 20b, and the third imaging unit 20c may each be configured to capture a moving image around the worker who performs a predetermined process.

In the present example, a case in which a first worker A1 and a second worker A2 perform a predetermined operation in the work region R will be described. The first worker A1 can perform an operation such as, for example, picking, disposing, and fixing a first part, and the second worker A2 can perform an operation such as, for example, picking, disposing, and fixing a second part. Hereinafter, the first worker A1 and the second worker A2 will be collectively described as a worker A.

The operation analysis system 100 includes an operation analysis device 10. The operation analysis device 10 includes a calculation unit that calculates a degree of similarity between two pieces of time series information out of a plurality of pieces of time series information indicating an operation that is recorded when one or more workers perform a predetermined operation one or more times. Here, the operation analysis device 10 may calculate the degree of similarity between two pieces of time series information for all combinations of two pieces of time series information selected out of the plurality of pieces of time series information. Also, the operation analysis device 10 includes a classification unit that classifies the plurality of pieces of time series information into a plurality of clusters based on the calculated degree of similarity, a selection unit that selects one or more clusters satisfying a predetermined condition from the plurality of clusters, and a first extraction unit that extracts time series information indicating a reference operation from the selected one or more clusters. Further, the operation analysis device 10 includes a display unit 10f that displays the time series information indicating the extracted reference operation. Here, the degree of similarity is a measure indicating how similar two pieces of time series information are. The degree of similarity between two pieces of time series information may be calculated by, for example, a dynamic time warping (DTW) method. Also, the predetermined condition for selecting the cluster may be a condition that a size of the cluster is equal to or larger than a first threshold value and smaller than a second threshold value. Here, the first threshold value and the second threshold value may be predetermined.

The reference operation may be a standard operation of one or more workers. When the plurality of pieces of time series information indicating the predetermined operation performed by the worker is classified into the plurality of clusters, and one or a more clusters satisfying the predetermined condition is selected from the plurality of clusters, the operation analysis device 10 can select a cluster of time series information indicating the standard operations of the one or more workers. Further, the operation analysis device 10 extracts the time series information indicating the reference operation from the selected one or more clusters.

As described above, according to the operation analysis device 10 according to the present embodiment, information indicating the reference operation can be extracted from accumulated information indicating the operation. Thereby, even when there is no expert who has a skill to extract the information indicating the reference operation from operation information accumulated in the past, the information indicating the reference operation can be appropriately generated. Also, the information indicating the reference operation can be generated in a short period of time.

### § 2 Configuration example

### [Functional configuration]

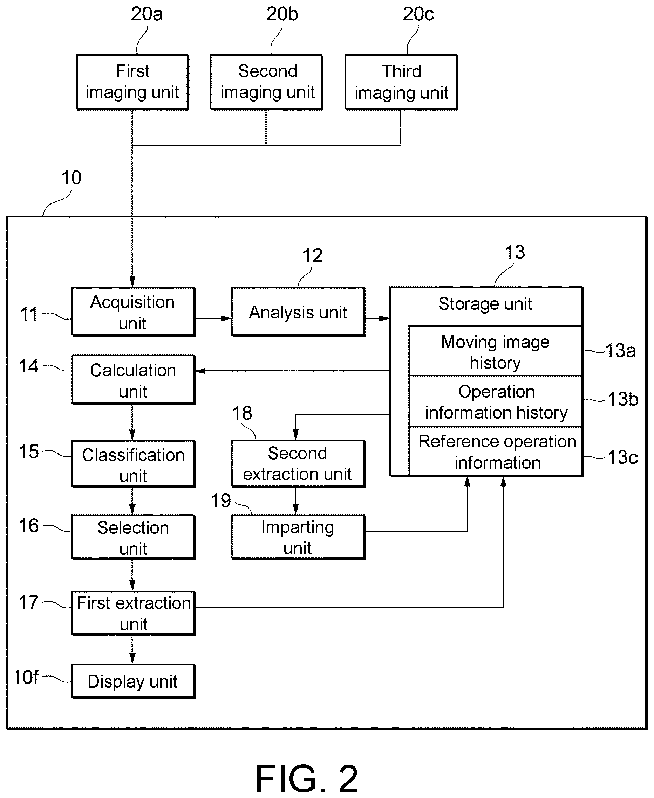

Next, an example of a functional configuration of the operation analysis system 100 according to the present embodiment will be described with reference to Fig. 2. The operation analysis system 100 includes the first imaging unit 20a, the second imaging unit 20b, the third imaging unit 20c, and the operation analysis device 10. Also, the operation analysis device 10 includes an acquisition unit 11, an analysis unit 12, a storage unit 13, a calculation unit 14, a classification unit 15, a selection unit 16, a first extraction unit 17, a second extraction unit 18, an imparting unit 19, and a display unit 10f.

### <Imaging unit>

The first imaging unit 20a, the second imaging unit 20b, and the third imaging unit 20c may each be configured by a general-purpose camera, and may capture a moving image including a scene in which the first worker A1 and the second worker A2 perform operations in the work region R. The first imaging unit 20a, the second imaging unit 20b, and the third imaging unit 20c may each capture an image of a part of the work region R, and may capture a moving image of a region smaller than the work region R. Specifically, a close-up moving image of the operation performed by the first worker A1 and the second worker A2 may be captured. The first imaging unit 20a, the second imaging unit 20b, and the third imaging unit 20c may capture, for example, a close-up moving image around the first worker A1 and the second worker A2.

Also, the first imaging unit 20a, the second imaging unit 20b, and the third imaging unit 20c may capture a plurality of moving images in which each of a plurality of portions of the work region R is captured. For example, the first imaging unit 20a may mainly capture a moving image in which the first worker A1 performs an operation, the third imaging unit 20c may mainly capture a moving image in which the second worker A2 performs an operation, and the second imaging unit 20b may capture both the moving images in which the first worker A1 performs the operation and the moving image in which the second worker A2 performs the operation. Also, the first imaging unit 20a, the second imaging unit 20b, and the third imaging unit 20c may capture moving images in which different processes are each performed at a plurality of positions in the work region R.

### <Acquisition unit>

The acquisition unit 11 acquires the plurality of pieces of time series information indicating the operation of the workers A recorded when the one or more workers A perform the predetermined operation one or more times. Here, the time series information may be a moving image showing the operation of the worker A. However, the time series information may also be information about coordinate values indicating the operation of the worker A measured by motion capture, or information indicating the operation of the worker A measured by attaching an acceleration sensor or a gyro sensor to the worker A. Also, the time series information may also be numerical information obtained by analyzing the moving image showing the operation of the worker A. The time series information (moving image in the present example) acquired by the acquisition unit 11 is transmitted to the storage unit 13 and stored as a moving image history 13a.

### <Analysis unit>

The analysis unit 12 analyzes a moving image showing the operation of the worker A and calculates operation information including the coordinate values indicating the operation of the worker A. The operation information may be information indicating a displacement of a typical position of the body of the worker A. The typical position of the body of the worker may be one position of the body, but it may typically be a plurality of positions. The operation information may be information indicating positions of joints of the worker A using a skeleton model. The analysis unit 12 may calculate the operation information including the coordinate values indicating the operation of the worker A from the moving image using, for example, a technology disclosed by Zhe Cao, et al. (3), "Realtime Multi-Person 2D Pose Optimization using Part Affinity Fields," arXiv: 1611.08050, 2016. Further, when the information indicating the operation of the worker A is measured by attaching an acceleration sensor or a gyro sensor to the worker A, the processing of calculating the operation information including the coordinate values indicating the operation of the worker A from the moving image using the analysis unit 12 is unnecessary.

The plurality of pieces of time series information may be information obtained by summing speeds or accelerations of a plurality of parts of the one or more workers A. In a case in which the coordinate values indicating the operation of the worker A are calculated using the analysis unit 12, speed vectors or acceleration vectors of the plurality of parts of the worker A may be calculated by differentiating coordinate vectors with respect to time, and time series information may be calculated by summing the speed vectors or the acceleration vectors of the plurality of parts of the workers A. Thereby, movements of the plurality of parts of the worker A can be represented by a single piece of time series information, and reference information for the movements of the plurality of parts can be extracted.

The plurality of parts of the one or more workers A may include both hands of the one or more workers A. Time series information in this case may be information obtained by summing speeds or accelerations of both hands of the worker A. Here, coordinates of both hands may be coordinates of a specific joint of the hand or coordinates of a back of the hand. Thereby, the information indicating the reference operation for movements of both hands of the worker A can be extracted.

### <Storage unit>

The storage unit 13 stores the moving image history 13a, an operation information history 13b, and a reference operation information 13c. The moving image history 13a includes a history of moving images captured by the first imaging unit 20a, the second imaging unit 20b, and the third imaging unit 20c. The operation information history 13b includes a history of operation information calculated by the analysis unit 12. Here, the operation information history 13b may be stored for each worker. The reference operation information 13c includes a history of reference operation information having the time series information indicating the reference operation. The reference operation information is extracted from the operation information history 13b by the first extraction unit 17. Also, the reference operation information may include information indicating a division point of the operation that is imparted to the time series information indicating the reference operation.

### <Calculation unit>

The calculation unit 14 calculates a degree of similarity between two pieces of time series information among the plurality of pieces of time series information. The calculation unit 14 may calculate the degree of similarity between two pieces of time series information by the DTW method for all combinations of two pieces of time series information selected out of the plurality of pieces of time series information. However, the calculation unit 14 may calculate the degree of similarity between the plurality of pieces of time series information by any method other than the DTW.

### <Classification unit>

The classification unit 15 classifies the plurality of pieces of time series information into a plurality of clusters based on the degree of similarity calculated by the calculation unit 14. The classification unit 15 may classify time series information having a high degree of similarity into the same cluster and time series information having a low degree of similarity into a different cluster. The classification unit 15 may classify the plurality of pieces of time series information into the plurality of clusters by hierarchical clustering in which time series information is grouped into a cluster in descending order of the degree of similarity. When the hierarchical clustering is used, the time series information is appropriately clustered without being dependent on initial conditions compared to a case in which, for example, a k-means method is used, and thereby the information indicating the reference operation can be extracted.

### <Selection unit>

The selection unit 16 selects one or more clusters satisfying a predetermined condition from the plurality of clusters. The selection unit 16 may select one or more clusters whose cluster size is equal to or larger than the first threshold value and smaller than the second threshold value from the plurality of clusters. More specifically, when the plurality of pieces of time series information is classified into a plurality of clusters by hierarchical clustering using the classification unit 15, the selection unit 16 may select a subtree whose number of leaf nodes is equal to or more than the first threshold value and less than the second threshold value from a dendrogram obtained by the hierarchical clustering as the one or more clusters satisfying the predetermined condition. Thereby, candidates for the time series information indicating the reference operation can be narrowed down while excluding outliers.

### <First extraction unit>

The first extraction unit 17 extracts the time series information indicating the reference operation from the selected one or more clusters. The first extraction unit 17 may extract the time series information indicating the reference operation at random from each of the one or more clusters satisfying the predetermined condition. The first extraction unit 17 may extract the time series information indicating the reference operation at random from each of the one or more clusters satisfying the predetermined condition using, for example, a pseudo-random number. Thereby, the time series information indicating the reference operation can be extracted without deviation from candidates of the time series information indicating the reference operation. However, the first extraction unit 17 may extract the time series information indicating the reference operation from the selected one or more clusters by other extraction criteria.

The first extraction unit 17 may also extract the time series information indicating the reference operation based on a length of the time series information from each of the one or more clusters satisfying the predetermined condition. For example, the first extraction unit 17 may extract, for example, time series information having a minimum length as the time series information indicating the reference operation. Further, a length of time series information may be defined by a file size of the time series information. Thereby, time series information in which it is highly probable that unnecessary operations are not included can be extracted as the time series information indicating the reference operation.

According to the operation analysis device 10 according to the present embodiment, the plurality of pieces of time series information indicating the predetermined operation performed by the worker A is classified into a plurality of clusters, one or more clusters satisfying the predetermined condition are selected from the plurality of clusters, and thereby a cluster of time series information indicating a standard operation of the one or more workers can be selected and information indicating the reference operation can be extracted.

### <Second extraction unit>

The second extraction unit 18 extracts one or more feature points from the time series information indicating the reference operation. The second extraction unit 18 may acquire the reference operation information 13c stored in the storage unit 13 and extract one or more feature points from the time series information indicating the reference operation. Here, although the feature points may be any point as long as it represents an extractable feature in the time series information, the feature points may be, for example, peaks when the time series information is plotted on a time axis and represented by a graph (a maximum point and a minimum point on the graph of the time series information). Such a feature point corresponds to, for example, a time when the worker performs an operation of suddenly changing a moving direction or a moving speed of a certain part (hand or the like). Also, the extracted one or more feature points each correspond to a specific time. Further, when the feature points are extracted from the time series information using the second extraction unit 18, the time series information may be information on coordinate values indicating the operation of the worker A measured by motion capture, or may be numerical information obtained by analyzing the moving image showing the operation of the worker A.

The second extraction unit 18 may extract a first feature point included in the time series information indicating the reference operation, exclude a section before and after the first feature point from an extraction target, and perform extraction of a second feature point included in the time series information indicating the reference operation. That is, the second extraction unit 18 may extract another feature point by excluding the section before and after the extracted feature point from the extraction target. The second extraction unit 18 may repeat the processing of extracting a feature point, excluding a section before and after the feature point from the extraction target, and extracting another feature point until the entire time series information is excluded from the extraction target or a predetermined number of feature points are extracted. When a section before and after the extracted feature point are excluded from the extraction target, it is possible to prevent noise from being erroneously extracted as the feature point, and a division point of the operation can be extracted with higher accuracy.

### <Imparting unit>

Based on the one or more feature points extracted by the second extraction unit 18, the imparting unit 19 imparts information indicating the division point of the operation to the time series information indicating the reference operation. Although the information indicating the division point of the operation may be in any form, it may be, for example, a division ID associated with a frame of the time series information. In this way, the division point of the operation can be clarified for the operation of the worker indicated by the reference time series information, and when it is compared with other time series information, comparison for each operation can be performed.

### [Hardware configuration]

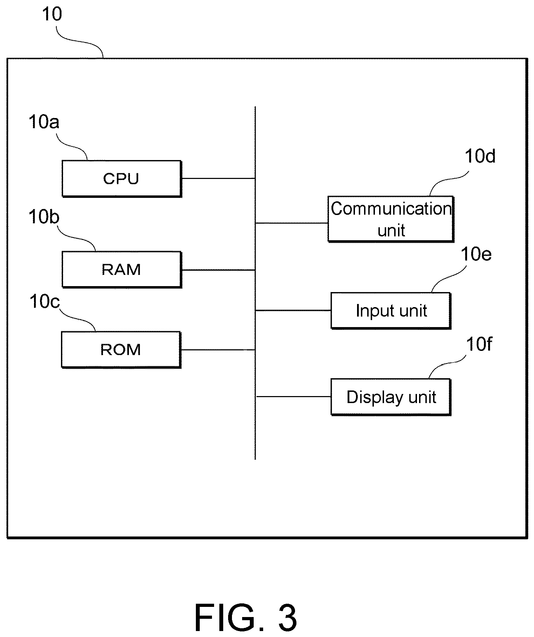

Next, an example of a hardware configuration of the operation analysis device 10 according to the present embodiment will be described with reference to Fig. 3. The operation analysis device 10 includes a central processing unit (CPU) 10a corresponding to an arithmetic device, a random access memory (RAM) 10b corresponding to the storage unit 13, a read only memory (ROM) 10c corresponding to the storage unit 13, a communication unit 10d, an input unit 10e, and the display unit 10f. These components are connected to each other via a bus so that data can be transmitted and received. Further, a case in which the operation analysis device 10 is configured by one computer will be described in the present example, but the operation analysis device 10 may be realized using a plurality of computers.

The CPU 10a is a control unit that performs control related to execution of a program stored in the RAM 10b or ROM 10c, and calculation and processing of data. The CPU 10a is an arithmetic device that executes a program (operation analysis program) for extracting the time series information indicating the reference operation from the plurality of pieces of time series information. The CPU 10a receives input data of various types from the input unit 10e and the communication unit 10d, displays calculation results of the input data on the display unit 10f, and stores the calculation results in the RAM 10b or the ROM 10c.

The RAM 10b is one capable of data rewriting in the storage unit 13 and may be configured by, for example, a semiconductor storage element. The RAM 10b stores the operation analysis program executed by the CPU 10a, and data such as the moving image history 13a, the operation information history 13b, and the reference operation information 13c.

The ROM 10c is one capable of reading data in the storage unit 13 and may be configured by, for example, a semiconductor storage element. The ROM 10c may store, for example, the operation analysis program and data that is not rewritten.

The communication unit 10d is an interface that connects the operation analysis device 10 to an external device. The communication unit 10d is connected to the first imaging unit 20a, the second imaging unit 20b, and the third imaging unit 20c by, for example, a local area network (LAN), and may receive moving images from the first imaging unit 20a, the second imaging unit 20b, and the third imaging unit 20c. Also, the communication unit 10d may also be connected to the Internet and receive moving images or operation information via the Internet. Also, the communication unit 10d may transmit extracted time series information to an external device via the Internet.

The input unit 10e receives data input from a user and may include, for example, a keyboard, a mouse, and a touch panel.

The display unit 10f visually displays calculation results by the CPU 10a and may be configured by, for example, a liquid crystal display (LCD).

The operation analysis program may be stored and provided in a computer-readable storage medium such as the RAM 10b or the ROM 10c or may be provided via a communication network connected by the communication unit 10d. In the operation analysis device 10, when the CPU 10a executes the operation analysis program, operations of the acquisition unit 11, the analysis unit 12, the calculation unit 14, the classification unit 15, the selection unit 16, the first extraction unit 17, the second extraction unit 18, and the imparting unit 19 described with reference to Fig. 2 are realized. Further, these physical components are examples and may not necessarily have to be independent components. For example, the operation analysis device 10 may include a large-scale integration (LSI) in which the CPU 10a, the RAM 10b, and the ROM 10c are integrated.

### § 3 Operation example

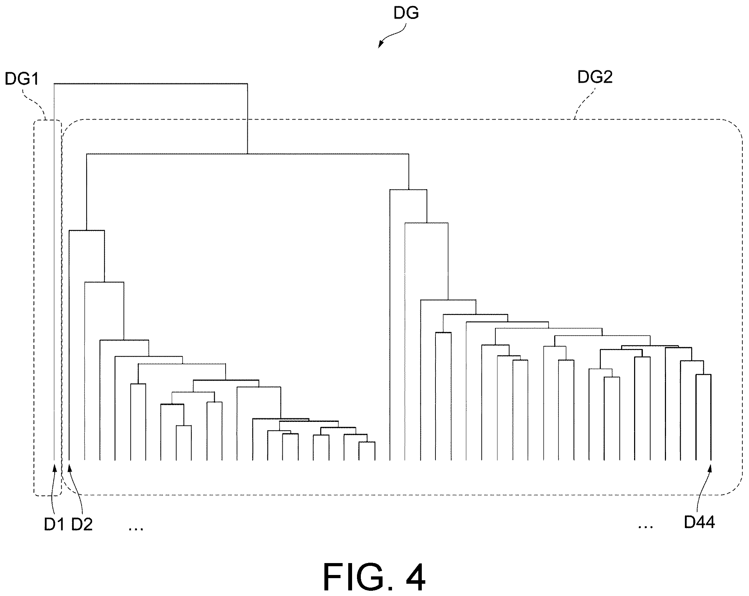

Fig. 4 is a diagram showing a first example of a dendrogram DG selected by the operation analysis device 10 according to the present embodiment. The dendrogram DG is generated by hierarchical clustering in which a plurality of pieces of time series information is grouped into a cluster in descending order of a degree of similarity. In the present example, the plurality of pieces of time series information is 44 in number and is shown as first time series information D1 and second time series information D2 to 44th time series information D44, and these constitute leaf nodes of the dendrogram DG.

The selection unit 16 of the operation analysis device 10 selects a subtree whose number of leaf nodes is equal to or more than the first threshold value and less than the second threshold value from the dendrogram DG of the first time series information D1 to the 44th time series information D44 obtained by hierarchical clustering as one or more clusters satisfying the predetermined condition. In the present example, the first threshold value is set to 5 and the second threshold value is set to 10.

The selection unit 16 divides the dendrogram DG into two at a highest level and specifies a first dendrogram DG1 and a second dendrogram DG2 serving as subtrees. Then, the selection unit 16 determines whether the number of leaf nodes included in the first dendrogram DG1 and the second dendrogram DG2 is equal to or more than the first threshold value (five in the present example) and less than the second threshold value (ten in the present example). Since the number of leaf nodes included in the first dendrogram DG1 is one and the number of leaf nodes included in the second dendrogram DG2 is 43, none of them satisfy the condition. Therefore, the selection unit 16 does not select the first dendrogram DGI1 and the second dendrogram DG2 as the one or more clusters satisfying the predetermined condition.

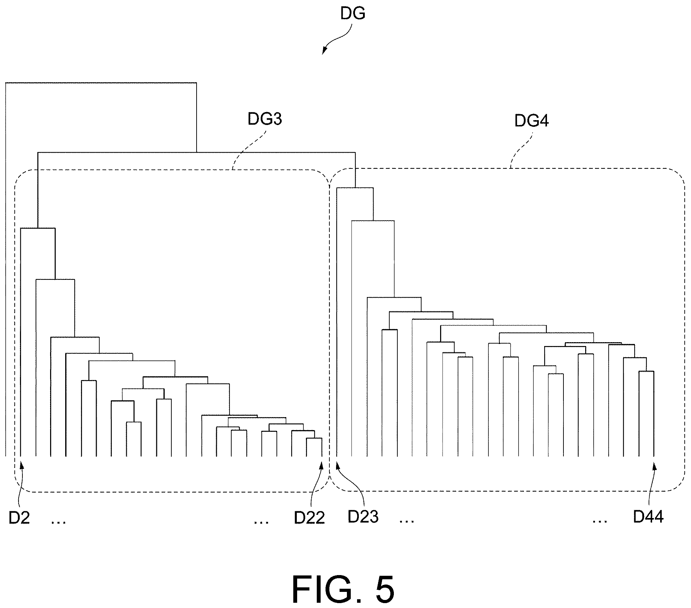

Fig. 5 is a diagram showing a second example of the dendrogram DG selected by the operation analysis device 10 according to the present embodiment. The selection unit 16 of the operation analysis device 10 divides the second dendrogram DG2, in which the number of leaf nodes is equal to or more than the first threshold value although the number of leaf nodes does not fall within the range equal to or more than the first threshold value (five in the present example) and less than the second threshold value (ten in the present example), into two at a highest level and specifies a third dendrogram DG3 and a fourth dendrogram DG4 serving as subtrees. The third dendrogram DG3 includes the second time series information D2 to 22nd time series information D22 as leaf nodes thereof. The fourth dendrogram DG4 includes 23rd time series information D23 to the 44th time series information D44 as leaf nodes thereof.

The selection unit 16 determines whether the number of leaf nodes included in each of the third dendrogram DG3 and the fourth dendrogram DG4 is equal to or more than the first threshold value (five in the present example) and less than the second threshold value (ten in the present example). Since the number of leaf nodes included in the third dendrogram DG3 is 21 and the number of leaf nodes included in the fourth dendrogram DG4 is 22, none of them satisfy the condition. Therefore, the selection unit 16 does not select the third dendrogram DG3 and the fourth dendrogram DG4 as the one or more clusters satisfying the predetermined condition.

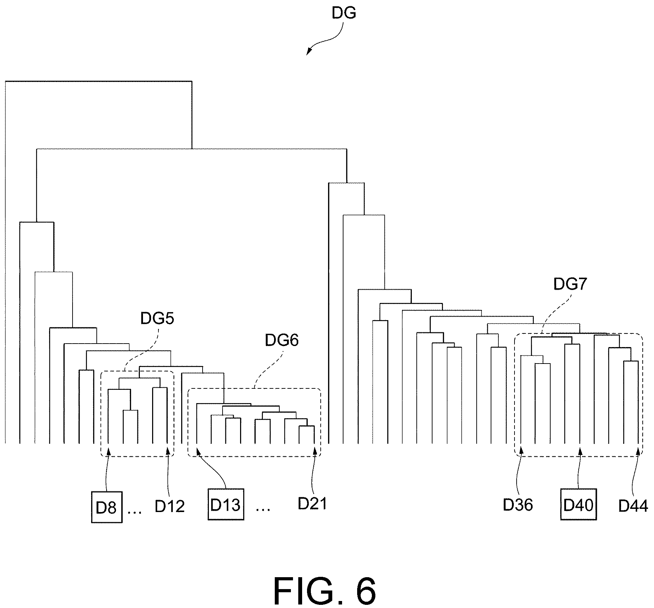

Fig. 6 is a diagram showing a third example of the dendrogram DG selected by the operation analysis device 10 according to the present embodiment. The selection unit 16 of the operation analysis device 10 repeats the processing of dividing a highest level of the dendrogram into two and selects a fifth dendrogram DG5, a sixth dendrogram DG6, and a seventh dendrogram DG7, which are subtrees in each of which the number of leaf nodes is equal to or more than the first threshold value (five in the present example) and less than the second threshold value (ten in the present example), as the one or more clusters satisfying the predetermined condition. The fifth dendrogram DG5 includes eighth time series information D8 to twelfth time series information D12 as leaf nodes thereof. The number of leaf nodes included in the fifth dendrogram DG5 is five and satisfies the condition that it is equal to or more than the first threshold value and less than the second threshold value. The sixth dendrogram DG6 includes 13th time series information D13 to 21st time series information D21 as leaf nodes thereof. The number of leaf nodes included in the sixth dendrogram DG6 is nine and satisfies the condition that it is equal to or more than the first threshold value and less than the second threshold value. The seventh dendrogram DG7 includes 36th time series information D36 to the 44th time series information D44 as leaf nodes thereof. The number of leaf nodes included in the seventh dendrogram DG7 is nine and satisfies the condition that it is equal to or more than the first threshold value and less than the second threshold value.

The first extraction unit 17 extracts the time series information indicating the reference operation at random from each of the one or more clusters satisfying the predetermined condition. The first extraction unit 17 may also extract time series information having a minimum length from each of the one or more clusters satisfying the predetermined condition as the time series information indicating the reference operation. In a case of the present example, the first extraction unit 17 extracts one piece of time series information indicating the reference operation at random from each of the fifth dendrogram DG5, the sixth dendrogram DG6, and the seventh dendrogram DG7. In the present example, the first extraction unit 17 extracts the eighth time series information D8 from the fifth dendrogram DG5 as the time series information indicating the reference operation, extracts the 13th time series information D13 from the sixth dendrogram DG6 as the time series information indicating the reference operation, and extracts 40th time series information D40 from the seventh dendrogram DG7 as the time series information indicating the reference operation. In this way, a cluster of the time series information indicating a standard operation of the one or more workers A can be selected and information indicating the reference operation can be extracted.

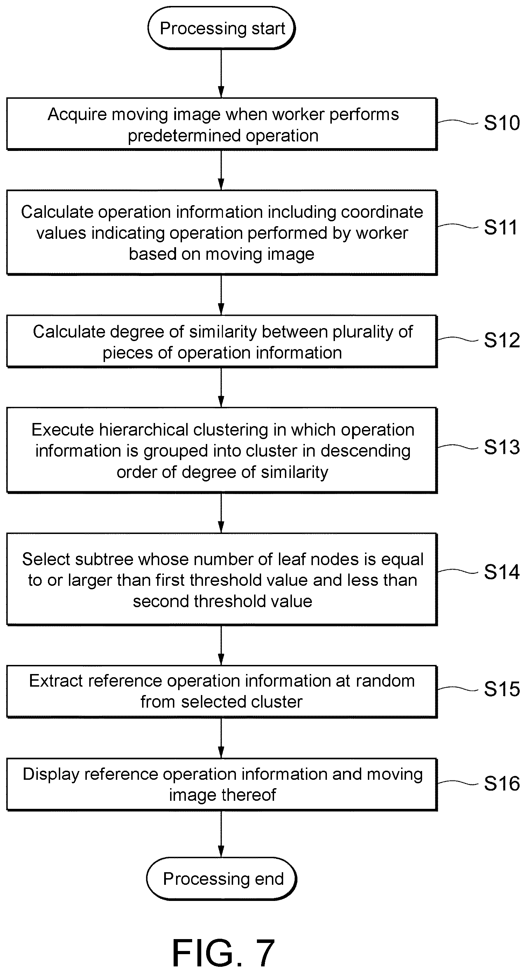

Fig. 7 is a flowchart of extraction processing of reference operation information performed by the operation analysis device 10 according to the present embodiment. First, the operation analysis device 10 acquires a moving image when the worker A performs a predetermined operation (S10).

The operation analysis device 10 calculates operation information including coordinate values indicating an operation performed by the worker A based on the moving image (S11). Here, the operation information is an example of time series information indicating the operation of the worker A. Then, the operation analysis device 10 calculates a degree of similarity between a plurality of pieces of operation information (S12).

Further, the operation analysis device 10 executes hierarchical clustering in which the operation information is grouped into a cluster in descending order of the degree of similarity (S13). The operation analysis device 10 divides a dendrogram obtained by the hierarchical clustering into two and selects a subtree whose number of leaf nodes is equal to or larger than the first threshold value and less than the second threshold value (S14). Then, the operation analysis device 10 extracts reference operation information at random from the selected cluster (S15). The extracted operation information is stored in the storage unit 13 as the reference operation information 13c.

Finally, the operation analysis device 10 displays the reference operation information and a moving image thereof on the display unit 10f (S16). Further, the reference operation information and the moving image may not necessarily have to be displayed on the display unit 10f and may be transmitted to an external device via the communication unit 10d. As a result, the extraction processing ends.

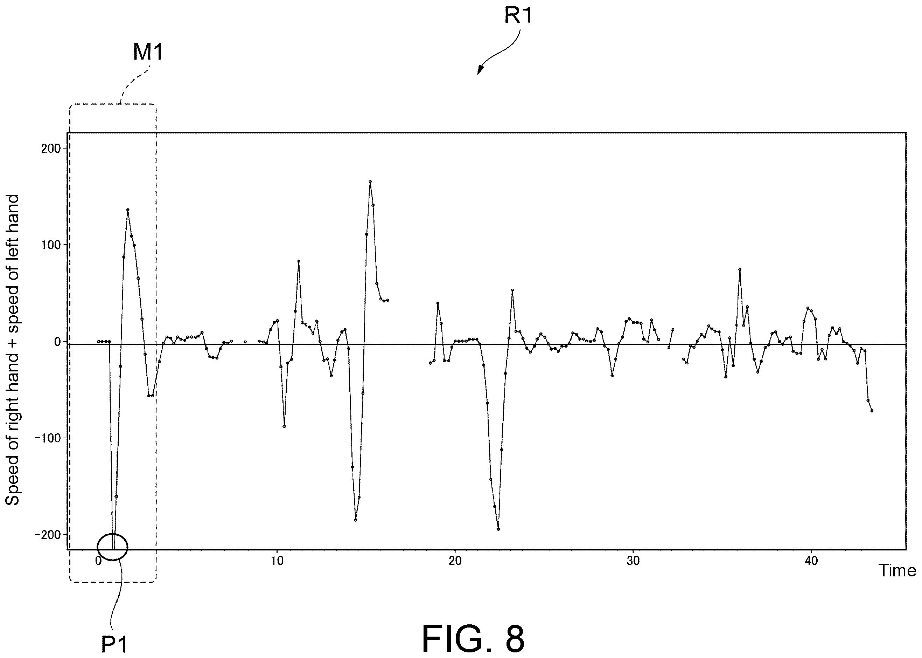

Fig. 8 is a diagram showing a first example of the feature point extracted by the operation analysis system 100 according to the present embodiment and a mask being set. In Fig, 8, an example of a graph of a reference operation information R1 in which a value obtained by summing a speed of a right hand and a speed of a left hand is represented in a dimensionless manner on the vertical axis and a time is represented in a dimensionless manner on the horizontal axis.

The second extraction unit 18 of the operation analysis device 10 extracts a first feature point P1 from the reference operation information R1. The second extraction unit 18 extracts a point at which an absolute value of a value obtained by summing the speed of the right hand and the speed of the left hand, which are values of the reference operation information R1, is maximum as the first feature point P1.

The second extraction unit 18 excludes a section before and after the first feature point P1 from the extraction target and performs extraction of the second feature point included in the reference operation information R1. In the present example, the second extraction unit 18 excludes the section before and after the first feature point P1 from the extraction target by setting a first mask M1 that covers the section before and after the first feature point P1.

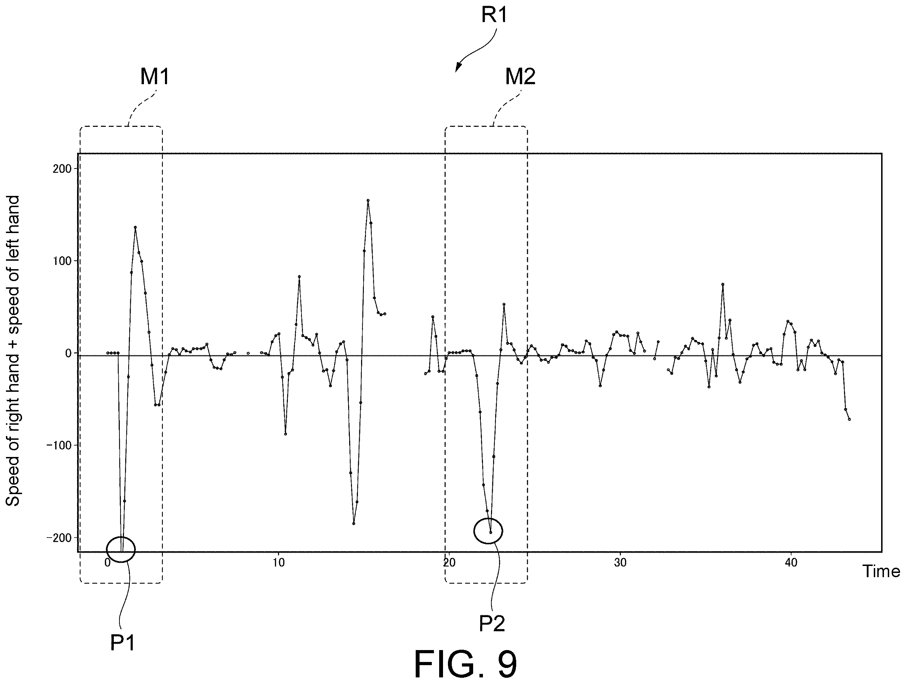

Fig. 9 is a diagram showing a second example of the feature point extracted by the operation analysis system 100 according to the present embodiment and a mask being set. Fig. 9 shows a second feature point P2 extracted by the second extraction unit 18 after the first feature point P1 shown in Fig. 8 is extracted and the first mask M1 is set.

The second extraction unit 18 excludes a range at which the first mask M1 is set from the extraction target and extracts the second feature point P2 included in the reference operation information R1. The second extraction unit 18 extracts a point at which an absolute value of the reference operation information R1 is maximum as the second feature point P2 after excluding the range at which the first mask M1 is set from the extraction target.

The second extraction unit 18 excludes a section before and after the second feature point P2 from the extraction target and performs extraction of a third feature point included in the reference operation information R1. In the present example, the second extraction unit 18 excludes the section before and after the second feature point P2 from the extraction target by setting a second mask M2 that covers the section before and after the second feature point P2. The second extraction unit 18 repeats the extraction processing until the mask is set over the entire region of the reference operation information R1 or the number of extracted feature points reaches a predetermined number.

The imparting unit 19 imparts information indicating a division point of the operation to the reference operation information R1 based on the extracted one or more feature points. In a case of the present example, the imparting unit 19 imparts at least two pieces of information indicating division points of the operation to the reference operation information R1 based on the first feature point P1 and the second feature point P2. In this way, the division point of the operation can be clarified for the operation of the worker A indicated by the reference operation information R1, and when it is compared with other operation information, comparison for each operation can be performed.

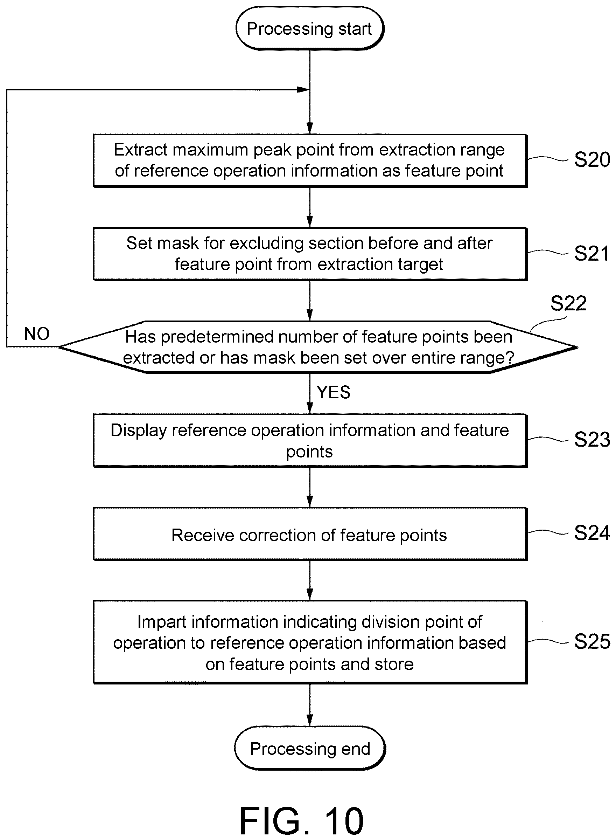

Fig. 10 is a flowchart of operation division processing performed by the operation analysis device 10 according to the present embodiment. First, the operation analysis device 10 extracts a maximum peak point from an extraction range of the reference operation information as a feature point (S20). Here, "maximum peak point" is a point at which an absolute value of a value of the reference operation information is the maximum.

Next, the operation analysis device 10 sets a mask for excluding a section before and after the feature point from the extraction target (S21). Then, the operation analysis device 10 determines whether a predetermined number of feature points has been extracted or the mask has been set over the entire range (S22). When the predetermined number of feature points has not been extracted and the mask has not been set over the entire range (S22: NO), the operation analysis device 10 repeats the processing of extracting the maximum peak point as the feature point from the extraction range of the reference operation information (S20) and setting the mask for excluding the section before and after the feature point from the extraction target (S21).

On the other hand, when the predetermined number of feature points has been extracted or the mask has been set over the entire range (S22: YES), the operation analysis device 10 displays the reference operation information and the feature points on the display unit 10f (S23) and receives correction of the feature points (S24). The correction of the feature points may be thinning of the extracted feature points or addition of the feature points.

Finally, the operation analysis device 10 imparts information indicating a division point of the operation to the reference operation information based on the extracted feature points and stores the information in the storage unit 13 (S25). As a result, the operation division processing ends.

## Claims

1. An operation analysis device (10), comprising:
an acquisition unit (11) for acquiring a plurality of pieces of time series information indicating an operation that is recorded when one or more workers perform a predetermined operation one or more times;
a calculation unit (14) for calculating a degree of similarity between two pieces of time series information out of the plurality of pieces of time series information;
a classification unit (15) for classifying the plurality of pieces of time series information into a plurality of clusters based on the degree of similarity; and
a selection unit (16) for selecting one or more clusters satisfying a predetermined condition from the plurality of clusters;
wherein the operation analysis device (10) is **characterized by**, further comprising:
a first extraction unit (17) for extracting time series information indicating a reference operation from the selected one or more clusters satisfying the predetermined condition.

2. The operation analysis device (10) according to claim 1, wherein the classification unit (15) is for classifying the plurality of pieces of time series information into the plurality of clusters by hierarchical clustering in which the time series information is grouped into a cluster in descending order of the degree of similarity.

3. The operation analysis device (10) according to claim 2, wherein the selection unit (16) is for selecting a subtree whose number of leaf nodes is equal to or more than a first threshold value and less than a second threshold value from a dendrogram of the plurality of pieces of time series information obtained by the hierarchical clustering as the one or more clusters satisfying the predetermined condition.

4. The operation analysis device (10) according to claim 3, wherein the first extraction unit (17) is for extracting the time series information indicating the reference operation based on a length of the time series information from each of the one or more clusters satisfying the predetermined condition.

5. The operation analysis device (10) according to any one of claims 1 to 4, further comprising:
a second extraction unit (18) for extracting one or more feature points from the time series information indicating the reference operation; and
an imparting unit (19) for imparting information indicating a division point of the operation to the time series information indicating the reference operation based on the one or more feature points.

6. The operation analysis device (10) according to claim 5, wherein the second extraction unit (18) is for extracting a first feature point included in the time series information indicating the reference operation, excluding a section before and after the first feature point from an extraction target, and performing extraction of a second feature point included in the time series information indicating the reference operation.

7. The operation analysis device (10) according to any one of claims 1 to 6, wherein the plurality of pieces of time series information is information obtained by summing speeds or accelerations of a plurality of parts of the one or more workers.

8. The operation analysis device (10) according to any one of claims 1 to 7, wherein the plurality of pieces of time series information are a plurality of moving images in which one or more workers perform the predetermined operation one or more times.

9. An operation analysis method, comprising:
acquiring a plurality of pieces of time series information indicating an operation that is recorded when one or more workers perform a predetermined operation one or more times;
calculating a degree of similarity between two pieces of time series information out of the plurality of pieces of time series information;
classifying the plurality of pieces of time series information into a plurality of clusters based on the degree of similarity; and
selecting one or more clusters satisfying a predetermined condition from the plurality of clusters;
wherein the operation analysis method is **characterized by**, further comprising:
extracting time series information indicating a reference operation from the selected one or more clusters satisfying the predetermined condition.

10. An operation analysis program, which causes an arithmetic unit provided in an operation analysis device (10) to function as:
an acquisition unit (11) for acquiring a plurality of pieces of time series information indicating an operation that is recorded when one or more workers perform a predetermined operation one or more times;
a calculation unit (14) for calculating a degree of similarity between two pieces of time series information out of the plurality of pieces of time series information;
a classification unit (15) for classifying the plurality of pieces of time series information into a plurality of clusters based on the degree of similarity; and
a selection unit (16) for selecting one or more clusters satisfying a predetermined condition from the plurality of clusters;
wherein the program is **characterised in that** it causes the arithmetic unit to function as:
a first extraction unit (17) for extracting time series information indicating a reference operation from the selected one or more clusters satisfying the predetermined condition.

## Patentansprüche

1. Betriebsanalysevorrichtung (10), aufweisend
eine Erlangungseinheit (11), die mehrere Elemente von Zeitreiheninformationen, die einen Betrieb angeben, der aufgezeichnet wird, wenn ein oder mehrere Arbeiter einen vorherbestimmten Betrieb ein oder mehrere Male ausführen, erlangt;
eine Berechnungseinheit (14), die einen Ähnlichkeitsgrad zwischen zwei Elementen von Zeitreiheninformationen aus den mehreren Elementen von Zeitreiheninformationen berechnet;
eine Klassifizierungseinheit (15), die die mehreren Elemente von Zeitreiheninformationen auf der Basis des Ähnlichkeitsgrads in mehrere Cluster klassifiziert; und
eine Wahleinheit (16), die aus den mehreren Clustern einen oder mehrere Cluster, die eine vorherbestimmte Bedingung erfüllen, wählt,
wobei die Betriebsanalysevorrichtung (10) **dadurch gekennzeichnet ist, dass** sie ferner
eine erste Extraktionseinheit (17) aufweist, die aus dem einen oder den mehreren gewählten Clustern, die die vorherbestimmte Bedingung erfüllen, Zeitreiheninformationen, die einen Bezugsbetrieb angeben, extrahiert.

2. Betriebsanalysevorrichtung (10) nach Anspruch 1, wobei die Klassifizierungseinheit (15) die mehreren Elemente von Zeitreiheninformationen durch hierarchisches Clustern, bei dem die Zeitreiheninformationen in absteigender Reihenfolge des Ähnlichkeitsgrads in einen Cluster gruppiert werden, in die mehreren Cluster klassifiziert.

3. Betriebsanalysevorrichtung (10) nach Anspruch 2, wobei die Wahleinheit (16) als den einen oder die mehreren Cluster, die die vorherbestimmte Bedingung erfüllen, einen Teilbaum, dessen Anzahl von Blattknoten gleich oder größer als ein erster Schwellenwert und geringer als ein zweiter Schwellenwert ist, aus einem Baumdiagramm der mehreren Elemente von Zeitreiheninformationen, das durch das hierarchische Clustern erhalten wurde, wählt.

4. Betriebsanalysevorrichtung (10) nach Anspruch 3, wobei die erste Extraktionseinheit (17) die Zeitreiheninformationen, die den Bezugsbetrieb angeben, auf der Basis einer Länge der Zeitreiheninformationen aus einem jeden des einen oder der mehreren Cluster, die die vorherbestimmte Bedingung erfüllen, extrahiert.

5. Betriebsanalysevorrichtung (10) nach einem der Ansprüche 1 bis 4, ferner aufweisend
eine zweite Extraktionseinheit (18), die einen oder mehrere Merkmalspunkte aus den Zeitreiheninformationen, die den Bezugsbetrieb angeben, extrahiert; und
eine Zuweisungseinheit (19) , die den Zeitreiheninformationen, die den Bezugsbetrieb angeben, auf der Basis des einen oder der mehreren Merkmalspunkte Informationen, die einen Teilungspunkt des Betriebs angeben, zuweist.

6. Betriebsanalysevorrichtung (10) nach Anspruch 5, wobei die zweite Extraktionseinheit (18) einen ersten Merkmalspunkt, der in den Zeitreihendaten, die den Bezugsbetrieb angeben, enthalten ist, extrahiert, einen Abschnitt vor und nach dem ersten Merkmalspunkt aus einem Extraktionsziel ausschließt und eine Extraktion eines zweiten Merkmalspunkts, der in den Zeitreiheninformationen, die den Bezugsbetrieb angeben, enthalten ist, durchführt.

7. Betriebsanalysevorrichtung (10) nach einem der Ansprüche 1 bis 6, wobei die mehreren Elemente von Zeitreiheninformationen Informationen sind, die durch Summieren von Geschwindigkeiten oder Beschleunigungen von mehreren Teilen des einen oder der mehreren Arbeiter erhalten werden.

8. Betriebsanalysevorrichtung (10) nach einem der Ansprüche 1 bis 7, wobei die mehreren Elemente von Zeitreiheninformationen mehrere Bewegtbilder sind, in denen ein oder mehrere Arbeiter den vorherbestimmten Betrieb ein oder mehrere Male ausführen.

9. Betriebsanalyseverfahren, umfassend
ein Erlangen mehrerer Elemente von Zeitreiheninformationen, die einen Betrieb angeben, der aufgezeichnet wird, wenn ein oder mehrere Arbeiter einen vorherbestimmten Betrieb ein oder mehrere Male ausführen;
ein Berechnen eines Ähnlichkeitsgrads zwischen zwei Elementen von Zeitreiheninformationen aus den mehreren Elementen von Zeitreiheninformationen;
ein Klassifizieren der mehreren Elemente von Zeitreiheninformationen auf der Basis des Ähnlichkeitsgrads in mehrere Cluster; und
ein Wählen eines oder mehrerer Cluster, die eine vorherbestimmte Bedingung erfüllen, aus den mehreren Clustern,
wobei das Betriebsanalyseverfahren **dadurch gekennzeichnet ist, dass** es ferner
ein Extrahieren von Zeitreiheninformationen, die einen Bezugsbetrieb angeben, aus dem einen oder den mehreren gewählten Clustern, die die vorherbestimmte Bedingung erfüllen, umfasst.

10. Betriebsanalyseprogramm, das eine Recheneinheit, die in einer Betriebsanalysevorrichtung (10) enthalten ist, dazu bringt, als
eine Erlangungseinheit (11), die mehrere Elemente von Zeitreiheninformationen, die einen Betrieb angeben, der aufgezeichnet wird, wenn ein oder mehrere Arbeiter einen vorherbestimmten Betrieb ein oder mehrere Male ausführen, erlangt;
eine Berechnungseinheit (14), die einen Ähnlichkeitsgrad zwischen zwei Elementen von Zeitreiheninformationen aus den mehreren Elementen von Zeitreiheninformationen berechnet;
eine Klassifizierungseinheit (15), die die mehreren Elemente von Zeitreiheninformationen auf der Basis des Ähnlichkeitsgrads in mehrere Cluster klassifiziert; und
eine Wahleinheit (16), die aus den mehreren Clustern einen oder mehrere Cluster, die eine vorherbestimmte Bedingung erfüllen, wählt,
zu wirken,
wobei das Programm **dadurch gekennzeichnet ist, dass** es die Recheneinheit dazu bringt, als
eine erste Extraktionseinheit (17), die aus dem einen oder den mehreren gewählten Clustern, die die vorherbestimmte Bedingung erfüllen, Zeitreiheninformationen, die einen Bezugsbetrieb angeben, extrahiert,
zu wirken.

## Revendications

1. Dispositif d'analyse d'opération (10), comprenant :
une unité d'acquisition (11) pour acquérir une pluralité d'éléments d'informations de série chronologique indiquant une opération qui est enregistrée lorsqu'un ou plusieurs travailleurs réalisent une opération prédéterminée une ou plusieurs fois ;
une unité de calcul (14) pour calculer un degré de similarité entre deux éléments d'informations de série chronologique parmi la pluralité d'éléments d'informations de série chronologique ;
une unité de classification (15) pour classer la pluralité d'éléments d'informations de série chronologique dans une pluralité de clusters sur la base du degré de similarité ; et
une unité de sélection (16) pour sélectionner un ou plusieurs clusters remplissant une condition prédéterminée parmi la pluralité de clusters ;
dans lequel le dispositif d'analyse d'opération (10) est **caractérisé en ce qu'**il comprend en outre :
une première unité d'extraction (17) pour extraire des informations de série chronologique indiquant une opération de référence à partir du ou des clusters sélectionnés remplissant la condition prédéterminée.

2. Dispositif d'analyse d'opération (10) selon la revendication 1, dans lequel l'unité de classification (15) est destinée à classer la pluralité d'éléments d'informations de série chronologique dans la pluralité de clusters par clustering hiérarchique dans lequel les informations de série chronologique sont regroupées dans un cluster par ordre décroissant du degré de similarité.

3. Dispositif d'analyse d'opération (10) selon la revendication 2, dans lequel l'unité de sélection (16) est destinée à sélectionner un sous-arbre dont un nombre de nœuds feuilles est supérieur ou égal à une première valeur seuil et inférieur à une deuxième valeur seuil à partir d'un dendrogramme de la pluralité d'éléments d'informations de série chronologique obtenu par le clustering hiérarchique en tant que le ou les clusters remplissant la condition prédéterminée.

4. Dispositif d'analyse d'opération (10) selon la revendication 3, dans lequel la première unité d'extraction (17) est destinée à extraire les informations de série chronologique indiquant l'opération de référence sur la base d'une longueur des informations de série chronologique à partir du ou des clusters remplissant la condition prédéterminée.

5. Dispositif d'analyse d'opération (10) selon l'une quelconque des revendications 1 à 4, comprenant en outre :
une deuxième unité d'extraction (18) pour extraire un ou plusieurs points caractéristiques à partir des informations de série chronologique indiquant l'opération de référence ; et
une unité d'application (19) pour appliquer des informations indiquant un point de division de l'opération aux informations de série chronologique indiquant l'opération de référence sur la base du ou des points caractéristiques.

6. Dispositif d'analyse d'opération (10) selon la revendication 5, dans lequel la deuxième unité d'extraction (18) est destinée à extraire un premier point caractéristique inclus dans les informations de série chronologique indiquant l'opération de référence, exclure une section avant et après le premier point caractéristique à partir d'une cible d'extraction, et réaliser une extraction d'un deuxième point caractéristique inclus dans les informations de série chronologique indiquant l'opération de référence.

7. Dispositif d'analyse d'opération (10) selon l'une quelconque des revendications 1 à 6, dans lequel la pluralité d'éléments d'informations de série chronologique sont des informations obtenues en sommant des vitesses ou des accélérations d'une pluralité de parties du ou des travailleurs.

8. Dispositif d'analyse d'opération (10) selon l'une quelconque des revendications 1 à 7, dans lequel la pluralité d'éléments d'informations de série chronologique sont une pluralité d'images animées dans lesquelles un ou plusieurs travailleurs réalisent l'opération prédéterminée une ou plusieurs fois.

9. Procédé d'analyse d'opération, comprenant :
l'acquisition d'une pluralité d'éléments d'informations de série chronologique indiquant une opération qui est enregistrée lorsqu'un ou plusieurs travailleurs réalisent une opération prédéterminée une ou plusieurs fois ;
le calcul d'un degré de similarité entre deux éléments d'informations de série chronologique parmi la pluralité d'éléments d'informations de série chronologique ;
la classification de la pluralité d'éléments d'informations de série chronologique dans une pluralité de clusters sur la base du degré de similarité ; et
la sélection d'un ou plusieurs clusters remplissant une condition prédéterminée parmi la pluralité de clusters ;
dans lequel le procédé d'analyse d'opération est **caractérisé en ce qu'**il comprend en outre :
l'extraction d'informations de série chronologique indiquant une opération de référence à partir du ou des clusters sélectionnés remplissant la condition prédéterminée.

10. Programme d'analyse d'opération, qui amène une unité arithmétique prévue dans un dispositif d'analyse d'opération (10) à fonctionner comme :
une unité d'acquisition (11) pour acquérir une pluralité d'éléments d'informations de série chronologique indiquant une opération qui est enregistrée lorsqu'un ou plusieurs travailleurs réalisent une opération prédéterminée une ou plusieurs fois ;
une unité de calcul (14) pour calculer un degré de similarité entre deux éléments d'informations de série chronologique parmi la pluralité d'éléments d'informations de série chronologique ;
une unité de classification (15) pour classer la pluralité d'éléments d'informations de série chronologique dans une pluralité de clusters sur la base du degré de similarité ; et
une unité de sélection (16) pour sélectionner un ou plusieurs clusters remplissant une condition prédéterminée parmi la pluralité de clusters ;
dans lequel le programme est **caractérisé en ce qu'**il amène l'unité arithmétique à fonctionner comme :
une première unité d'extraction (17) pour extraire des informations de série chronologique indiquant une opération de référence à partir du ou des clusters sélectionnés remplissant la condition prédéterminée.
